(19) Europäisches Patentamt
European Patent Office
Office européen des brevets

(11) **EP 3 959 506 B1**

(12) **FASCICULE DE BREVET EUROPEEN**

(45) Date de publication et mention
de la délivrance du brevet:
**07.06.2023   Bulletin 2023/23**

(21) Numéro de dépôt: **20720054.4**

(22) Date de dépôt: **22.04.2020**

(51) Classification Internationale des Brevets (IPC):
**G01N 21/03** *(2006.01)*      **G01N 21/3504** *(2014.01)*

(52) Classification Coopérative des Brevets (CPC):
**G01N 21/031; G01N 21/3504;** G01N 2201/066

(86) Numéro de dépôt international:
**PCT/EP2020/061257**

(87) Numéro de publication internationale:
**WO 2020/216809 (29.10.2020 Gazette 2020/44)**

(54) **CAPTEUR DE GAZ COMPACT**

**KOMPAKTER GASSENSOR**

**COMPACT GAS SENSOR**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.04.2019   FR 1904355**

(43) Date de publication de la demande:
**02.03.2022   Bulletin 2022/09**

(73) Titulaire: **Elichens
38040 Grenoble (FR)**

(72) Inventeur: **DUPREZ, Hélène
38170 SEYSSINET-PARISET (FR)**

(74) Mandataire: **INNOV-GROUP
310, avenue Berthelot
69372 Lyon Cedex 08 (FR)**

(56) Documents cités:
**EP-A1- 3 208 601          FR-A1- 3 022 999
FR-A1- 3 057 363          US-A1- 2006 226 367
US-A1- 2015 219 491**

**Description**

## DOMAINE TECHNIQUE

Le domaine technique de l'invention est un capteur optique de gaz, et plus particulièrement un capteur infrarouge non dispersif.

## ART ANTERIEUR

Le recours à des méthodes optiques pour l'analyse d'un gaz est assez fréquent. Des dispositifs permettent de déterminer la composition d'un gaz en se basant sur le fait que les espèces composant un gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer Lambert. Ce principe permet une estimation de la concentration d'une espèce gazeuse présente dans le milieu.

La source de lumière est usuellement une source émettant dans l'infrarouge, la méthode utilisée étant usuellement désignée par le terme anglosaxon "NDIR détection", l'acronyme NDIR signifiant Non Dispersive Infra-Red. Un tel principe a été fréquemment mis en oeuvre, et est par exemple décrit dans de nombreux documents, par exemple dans US5026992 ou WO2007064370.

Selon les procédés les plus courants, le gaz analysé s'étend entre une source de lumière et un photodétecteur, dit photodétecteur de mesure, ce dernier étant destiné à mesurer une onde lumineuse, émise par la source, transmise à travers le gaz à analyser, et partiellement absorbée par ce dernier. Les procédés comprennent généralement une mesure d'une onde lumineuse, dite onde lumineuse de référence, émise par la source, et non absorbée par le gaz analysé.

La comparaison entre l'onde lumineuse en présence de gaz et l'onde lumineuse sans gaz permet de caractériser le gaz. Il s'agit par exemple de déterminer une quantité d'une espèce gazeuse dans le gaz, selon la technologie désignée par le terme "NDIR par absorption". Il peut également s'agir d'estimer une quantité de particules dans le gaz, en détectant une lumière diffusée par ce dernier selon une plage angulaire de diffusion prédéterminée.

L'onde lumineuse de référence est mesurée par un photodétecteur de référence. Il peut s'agir d'un photodétecteur de référence différent du photodétecteur de mesure, et agencé de façon à être disposé face à la source de lumière le photodétecteur de référence étant associé à un filtre optique de référence. Le filtre optique de référence définit une bande spectrale de référence, dans laquelle le gaz à analyser ne présente pas d'absorption significative.

Les documents EP2711687 et EP2891876 décrivent des capteurs de gaz comportant des enceintes, dans lesquelles un ou plusieurs miroirs sont agencés. Les miroirs permettent de maximiser le trajet de la lumière dans l'enceinte, et de focaliser les rayons lumineux ayant traversé le gaz sur le ou les photodétecteurs. Cela permet d'augmenter la sensibilité de détection tout en utilisant des dispositifs compacts.

Le document EP3208601 décrit un capteur de gaz compact, formé de parois réfléchissantes dont le profil est elliptique. Il en est de même du document WO2018162848 ainsi que du document FR3022999.

Le demandeur a conçu un capteur de gaz particulièrement compact, compatible avec un format industriel courant. Il en résulte un capteur de gaz aux performances optimisées, privilégiant notamment la compacité et la sensibilité.

## EXPOSE DE L'INVENTION

Un premier objet de l'invention est un capteur de gaz comportant une enceinte, apte à recevoir un gaz, l'enceinte comportant une paroi transversale, s'étendant, autour d'un axe transversal, entre une première paroi et une deuxième paroi, le capteur comportant également :

- une source de lumière, configurée pour émettre une onde lumineuse se propageant dans l'enceinte, en formant, à partir de la source de lumière, un premier cône de lumière;
- un photodétecteur de mesure apte à détecter une onde lumineuse émise par la source de lumière et s'étant propagé à travers l'enceinte;

le capteur étant tel que la première paroi et la deuxième paroi comportent chacune au moins une surface réfléchissante, formant une partie d'une ellipsoïde de révolution, à chaque surface réfléchissante étant associé un rang $n$, $n$ étant un entier supérieur ou égal à 1, de telle sorte que le capteur comporte :

- une première surface réfléchissante de rang 1, présentant un premier foyer et un deuxième foyer, la première surface réfléchissante étant disposée face à la source de lumière ;
- au moins une surface réfléchissante de rang $n$ strictement supérieur à 1, chaque surface réfléchissante de rang $n$

présentant :

- un premier foyer, confondu avec le deuxième foyer d'une surface réfléchissante de rang précédent $n$ -1 ;
- un deuxième foyer, distinct du premier foyer, confondu avec le premier foyer d'une surface réfléchissante de rang suivant $n$ +1 ;

- une dernière surface réfléchissante de rang $N$, comportant un premier foyer, confondu avec le deuxième foyer d'une surface réfléchissante de rang précédent, la dernière surface réfléchissante comportant également un deuxième foyer;

de telle sorte que l'onde lumineuse émise par la source de lumière est successivement réfléchie par les $N$ surfaces réfléchissantes ellipsoïdales de révolution, selon leur rang respectif, avant de converger vers le deuxième foyer de la dernière surface réfléchissante, en formant un dernier cône de lumière, le photodétecteur de mesure étant disposé de manière à s'étendre dans le dernier cône de lumière.

La première surface réfléchissante ellipsoïdale est associée à une première ellipse. L'excentricité de la première ellipse est inférieure à 0.7, voire à 0.5,

La source de lumière est de préférence disposée au niveau du premier foyer de la première surface réfléchissante, ou à une distance inférieure à 1 mm de ce dernier. Le photodétecteur de mesure est de préférence disposé au niveau du deuxième foyer de la dernière surface réfléchissante, ou à une distance inférieure à 1 mm de ce dernier.

De façon avantageuse :

- chaque surface réfléchissante de rang $n$ est configurée pour réfléchir l'onde lumineuse qu'elle reçoit en formant un cône de lumière de rang $n+1$, ce dernier s'étendant autour d'un axe de propagation de rang $n$ +1 ;
- lorsque $n<N$, l'axe de propagation de rang $n+1$ s'étend entre la surface de rang $n$ jusqu'à la surface de rang $n+1$, en passant par le deuxième foyer de la surface de rang $n$, ce dernier étant confondu avec le premier foyer de la surface de rang $n$ +1 ;
- lorsque $n = N$, l'axe de propagation de rang $N+1$ s'étend entre la surface de rang $N$ jusqu'au photodétecteur de mesure ;

de telle sorte que l'onde lumineuse émise par la source de lumière subit un nombre de réflexions correspondant au nombre de surfaces réfléchissantes avant d'atteindre le photodétecteur de mesure, en formant un dernier cône de lumière.

Lorsque $n<N$ chaque cône de lumière de rang $n+1$ peut converger vers le deuxième foyer de la surface réfléchissante de rang $n$ à partir de laquelle il se propage, puis diverger vers la surface réfléchissante de rang $n+1$ vers laquelle il se propage.

Selon un mode de réalisation, la source de lumière et le photodétecteur de mesure sont solidaires d'une face interne de la première paroi, la face interne étant orientée vers l'intérieur de l'enceinte. Selon ce mode de réalisation, les surfaces réfléchissantes de rang pair sont ménagées sur la face interne de la première paroi. Les surfaces réfléchissantes de rang impair sont ménagées sur une face interne de la deuxième paroi. L'enceinte peut alors être formée par un assemblage de la deuxième paroi en regard de la première paroi.

De façon préférentielle, le nombre de surfaces réfléchissantes s'étendant entre la source de lumière et le photodétecteur de mesure est impair. Le nombre de surfaces réfléchissantes s'étendant entre la source de lumière et le photodétecteur de mesure peut être égal à 5.

Le capteur peut comporter un photodétecteur de référence, configuré pour détecter une onde lumineuse considérée comme non atténuée par le gaz. Le capteur peut alors comporter une surface réfléchissante de référence, formant un ellipsoïde de révolution, la surface de référence comportant :

- un premier foyer disposé au niveau de la source de lumière, ou à une distance inférieure à 1 mm de cette dernière ;
- un deuxième foyer disposé au niveau du photodétecteur de mesure, ou à une distance inférieure à 1 mm de ce dernier.

De préférence, la source de lumière, le photodétecteur de mesure et le photodétecteur de référence sont coplanaires, ou sensiblement coplanaires, en admettant une tolérance inférieure à 1 mm ou 2 mm. Ils peuvent être agencés au niveau de la première paroi.

De préférence, chaque surface réfléchissante ellipsoïdale est obtenue par une rotation d'une ellipse, à laquelle la surface est associée, autour de son grand axe.

Un deuxième objet de l'invention est procédé d'analyse d'un gaz à l'aide d'un capteur selon le premier objet de l'invention, le procédé comportant les étapes suivantes :

a) introduction du gaz dans l'enceinte du capteur;

b) illumination du gaz à l'aide de la source de lumière;

c) mesure d'une intensité lumineuse d'une onde lumineuse, émise par la source de lumière, et s'étant propagée à travers l'enceinte par le photodétecteur de mesure;

d) détermination d'une quantité d'une espèce gazeuse dans le gaz, à partir de l'intensité lumineuse mesurée.

L'étape d) est généralement mise en oeuvre par une unité de traitement à partir d'un signal généré par le photodétecteur de mesure.

L'étape d) peut prendre en compte une intensité qui serait mesurée par le photodétecteur de mesure en l'absence de l'espèce absorbante dans l'enceinte. Cette intensité peut être mesurée initialement ou peut être estimée en utilisant un photodétecteur de référence, ce dernier mesurant une intensité d'une onde lumineuse de référence, émise par la source de lumière, et dont l'absorption par le gaz est considérée comme négligeable. Selon un mode de réalisation, le photodétecteur mesure l'onde lumineuse de référence dans une bande spectrale de référence dans laquelle l'onde lumineuse émise par la source de lumière est considérée comme non absorbée.

L'invention sera mieux comprise à la lecture de l'exposé des exemples de réalisation présentés, dans la suite de la description, en lien avec les figures listées ci-dessous.

## FIGURES

Les figures 1A et 1B sont des coupes du capteur de gaz, respectivement dans un plan transversal XZ et dans un plan principal XY, le plan principal étant perpendiculaire au plan transversal.

La figure 2A schématise les première et deuxième parois du capteur et montre l'emplacement des principaux composants du capteur, c'est-à-dire une source de lumière, un photodétecteur de mesure, ainsi que des surfaces réfléchissantes. Sur cette figure, l'axe $D_1$ correspond à une génératrice circulaire représentée sur la figure 1B. Cette représentation revient à dérouler l'enceinte du capteur selon cette génératrice.

La figure 2B schématise les première et deuxième parois du capteur. Sur cette figure, l'axe $D_2$ correspond à une génératrice circulaire représentée sur la figure 1B. Cette représentation revient à dérouler l'enceinte du capteur selon cette génératrice.

Les figures 3A, 3B, 3C et 3D représentent les principaux composants du capteur. Entre les différentes figures, on tourne autour du capteur selon un sens de rotation positif représenté sur la figure 1B.

Les figures 4A et 4B sont des résultats de modélisation permettant d'estimer les performances du capteur, respectivement relativement à la détection de méthane et de dioxyde de carbone.

## EXPOSE DE MODES DE REALISATION PARTICULIERS

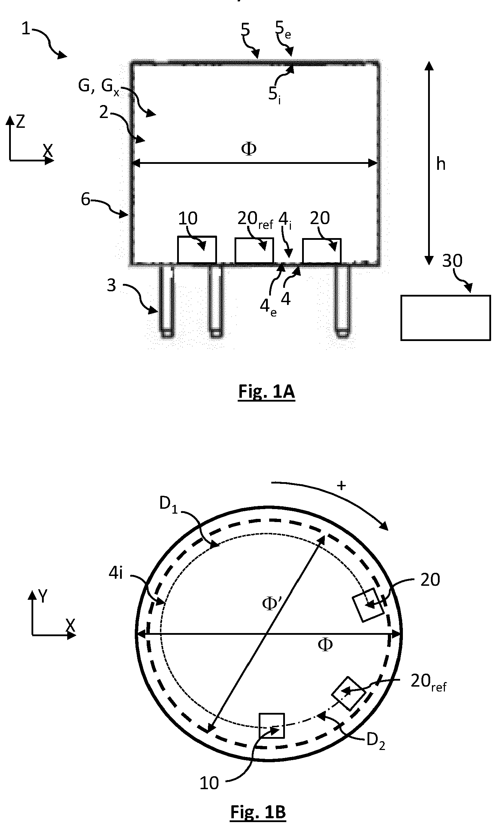

Les figures 1A et 1B schématisent un capteur de gaz 1 selon l'invention. Le capteur de gaz 1 comporte une enceinte 2 délimitée par une première paroi 4, une deuxième paroi 5 et une paroi transversale 6. La paroi transversale 6 s'étend parallèlement à un axe transversal Z. La paroi transversale 6 est une paroi annulaire, autour de l'axe transversal Z. Elle s'étend entre la première paroi 4 et la deuxième paroi 5. L'axe transversal Z s'étend perpendiculairement à un plan principal XY. L'enceinte 2 forme un boîtier cylindrique.

La première paroi 4 comporte une face externe $4_e$ et une face interne $4_i$. La deuxième paroi 5 comporte une face externe $5_e$ et une face interne $5_i$. Les faces externes $4_e$, $5_e$ respectives des premières et deuxièmes parois 4, 5 sont planes, parallèlement au plan principal XY. Elles sont perpendiculaires à l'axe transversal Z autour duquel s'étend la paroi annulaire 6. Les faces internes $4_i$, $5_i$ respectives des premières et deuxièmes parois 4, 5 sont orientées vers l'intérieur de l'enceinte 2. L'enceinte 2 est reliée à des broches de connexion 3, parallèles à l'axe transversal Z.

La forme et les dimensions du capteur 1 sont conformes à un format usuel dans le domaine de la détection de gaz, dit format 4R. Le diamètre $\Phi$ de l'enceinte 2 est de 20 mm, et sa hauteur h est de 16.6 mm. Compte tenu de l'épaisseur de la paroi transversale 6, le diamètre interne $\Phi'$ de l'enceinte 2 est de 17 mm. On définit un sens positif de rotation autour de l'axe transversal Z, qui est considéré arbitrairement comme similaire au sens de rotation des aiguilles d'une montre.

Un avantage du format 4R est qu'il est largement utilisé dans le domaine de l'électronique. Ainsi, un capteur de gaz 1 respectant ce format peut aisément être raccordé à des circuits électroniques existants. Le respect de ce format facilite la maintenance de systèmes de mesure, en facilitant le remplacement de capteurs.

Cependant, une difficulté liée à ce format est sa compacité. Le volume utile de l'enceinte est faible, ce qui a nécessité la démarche d'optimisation décrite ci-après.

L'enceinte 2 est destinée à être occupée par un gaz $G$ à analyser. Le gaz à analyser comporte une espèce gazeuse $G_x$ dont on souhaite déterminer une concentration $C_x$ dans le gaz. L'espèce gazeuse $G_x$ absorbe la lumière,

et notamment la lumière infra-rouge, dans une bande spectrale d'absorption $\Delta\lambda_x$. Le capteur 1 comporte également :

- une source de lumière 10, configurée pour émettre une onde lumineuse 11 dans une bande spectrale d'émission $\Delta\lambda$. La bande spectrale d'émission peut s'étendre entre le proche ultra-violet et l'infra-rouge moyen, par exemple entre 200 nm et 20 $\mu$m, et le plus souvent dans l'infra-rouge, la bande spectrale d'émission $\Delta\lambda$ étant par exemple comprise entre 1 $\mu$m et 20 $\mu$m.

- un photodétecteur de mesure 20, configuré pour détecter une onde lumineuse 14, dite onde lumineuse transmise, dans la bande spectrale d'absorption $\Delta\lambda_x$. L'onde lumineuse transmise est une onde lumineuse émise par la source de lumière 10, et s'étant propagée à travers l'enceinte, en s'atténuant progressivement durant son parcours à travers le gaz. Le photodétecteur de mesure 20 peut être associé à un filtre passe-bande, définissant une bande spectrale de détection $\Delta\lambda_d$ comprise dans la bande spectrale d'absorption $\Delta\lambda_x$.

- un photodétecteur de référence $20_{ref}$, configuré pour détecter une onde lumineuse de référence. L'onde lumineuse de référence détectée par le photodétecteur de référence $20_{ref}$ est considérée comme non atténuée par le gaz G présent dans l'enceinte. Dans cet exemple, le photodétecteur de référence détecte l'onde lumineuse de référence $20_{ref}$ dans une bande spectrale de référence $\Delta\lambda_{ref}$, dans laquelle l'atténuation de l'onde lumineuse émise par la source est considérée comme négligeable. Le photodétecteur de référence peut être associé à un filtre passe-bande de référence, définissant la bande spectrale de référence $\Delta\lambda_{ref}$. Par exemple, la bande spectrale de référence $\Delta\lambda_{ref}$ est centrée autour de la longueur d'onde 3.91 $\mu$m. Le recours à un photodétecteur de référence est optionnel mais est avantageux. De façon alternative, le photodétecteur de référence n'est pas disposé dans l'enceinte 2 comportant le gaz, auquel cas la bande spectrale de référence peut être similaire à la bande spectrale de mesure.

De préférence, la source de lumière 10, le photodétecteur de mesure 20 et le photodétecteur de référence $20_{ref}$ sont reliés à un même support plan. Il peut notamment s'agir d'une carte électronique formant la première paroi 4 de l'enceinte 2. Une telle disposition simplifie la fabrication du capteur.

La source de lumière peut être impulsionnelle, et émettre des impulsions lumineuses dont la durée est généralement comprise entre 50 ms et 1 s. Il peut notamment s'agir d'une source de lumière infra-rouge de type filament formé sur une membrane suspendue, le filament étant parcouru par un courant électrique. De cette façon, la membrane suspendue est chauffée à une température comprise entre 400°C et 800°C, de façon à émettre une lumière infra-rouge.

Le photodétecteur de mesure 20 et le photodétecteur de référence $20_{ref}$ peuvent être des thermopiles ou des pyrodétecteurs ou des photodiodes. Chaque photodétecteur est configuré pour générer un signal de détection, dont l'amplitude A correspond à une intensité I de l'onde lumineuse détectée.

L'intensité $I$ de l'onde lumineuse détectée par le photodétecteur de mesure 20 dépend de la concentration $C_x$ de l'espèce gazeuse d'intérêt $G_x$ selon la relation de Beer Lambert :

$$att = \frac{I}{I_0} = e^{-\mu(C_x)l} \quad (1)$$

où :

- $\mu(C_x)$ est un coefficient atténuation, dépendant de la concentration $C_x$ recherchée;
- $l$ est l'épaisseur de gaz traversé par l'onde lumineuse dans l'enceinte ;
- $I_0$ correspond à l'intensité de l'onde qui est ou serait détectée par le photodétecteur de mesure 20 en l'absence de gaz absorbant dans l'enceinte.

La comparaison entre $I$ et $I_0$, prenant la forme d'un ratio $I/I_0$, correspond à une atténuation *att* causée par l'espèce gazeuse $G_x$ considérée. Lors de chaque impulsion de la source de lumière 10, on peut ainsi déterminer $\mu(C_x)$, ce qui permet d'estimer la quantité $C_x$ sachant que la relation entre $C_x$ et $\mu(C_x)$ est connue.

L'intensité $I_0$ peut être prédéterminée, par exemple au cours d'une calibration, ou mesurée en l'absence de gaz dans l'enceinte 20. Lorsque le capteur comporte un photodétecteur de référence $20_{ref}$, l'intensité $I_0$ peut être estimée à partir de l'intensité de référence $I_{ref}$ mesurée par le photodétecteur de référence. Pour cela, connaissant le spectre d'émission de la source de lumière 10, on utilise une fonction $f$ permettant d'estimer $I_0$ en fonction de $I_{ref}$ selon l'expression (2) :

$$I_0 = f(I_{ref}) \quad (2)$$

Le capteur comporte une unité de traitement 30, recevant les signaux mesurés par le photodétecteur de mesure 20 et l'éventuel photodétecteur de référence $20_{ref}$. L'unité de traitement 30 permet d'effectuer, à partir de ces derniers, les calculs d'estimation de la concentration de l'espèce gazeuse recherchée. L'unité de traitement 30 comporte par exemple un microprocesseur.

Les dimensions de l'enceinte 2 dans laquelle s'étend le gaz sont particulièrement réduites. Or, il est préférable que l'onde lumineuse détectée par le photodétecteur de mesure 20 soit suffisamment atténuée de façon que l'atténuation *att* soit plus aisément quantifiable, en tenant compte des différents bruits de la chaîne de mesure. Il est donc préférable que la longueur *l* parcourue par les rayons atteignant le photodétecteur de mesure soit suffisamment élevée. Le demandeur considère que l'atténuation *att* doit être supérieure à 0.2, en étant par exemple comprise entre 0.2 et 0.3.

Afin d'optimiser la longueur *l* des rayons parcourus par les rayons parvenant au photodétecteur de mesure, l'inventrice a conçu une enceinte 2 comportant des surfaces réfléchissantes de forme ellipsoïdales. Ainsi, les surfaces réfléchissantes suivent une partie d'une ellipsoïde de révolution. Les surfaces réfléchissantes permettent à l'onde émise par la source de lumière d'effectuer de multiples réflexions avant d'atteindre le photodétecteur de mesure. Il en résulte une augmentation de la longueur *l* parcourue, dans l'enceinte 2, par les rayons atteignant le photodétecteur de mesure 20.

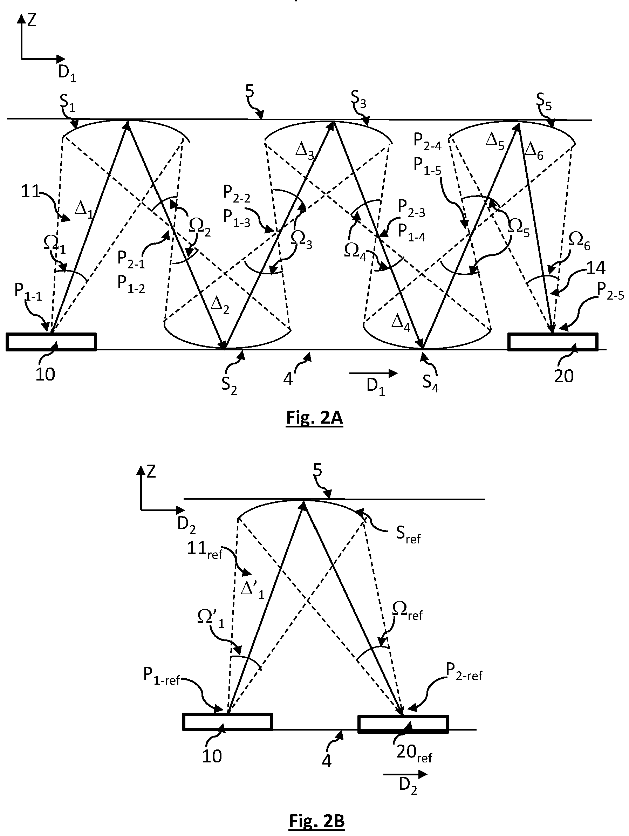

La figure 2A schématise l'intérieur de l'enceinte 2. Sur la figure 2A, on a représenté l'intérieur de l'enceinte 2 en suivant une génératrice circulaire $D_1$ représentée en pointillés sur la figure 1B. Cette représentation revient à dérouler l'enceinte selon la génératrice circulaire $D_1$, le long de laquelle s'étendent des surfaces réfléchissantes ellipsoïdales $S_n$ de rang *n*. L'indice *n* est un entier naturel tel que $1 \le n \le N$, *N* étant le nombre de surfaces réfléchissantes ellipsoïdales situées sur le chemin optique de l'onde lumineuse émise par la source de lumière 10 et se propageant vers le photodétecteur de mesure 20.

Le terme surface ellipsoïdale $S_n$ désigne une surface ellipsoïdale de révolution, obtenue par une rotation dans l'espace d'une ellipse $E_n$ autour de l'un de ses axes. Dans l'exemple décrit, chaque surface ellipsoïdale $S_n$ est associée à une ellipse $E_n$ présentant un grand axe $a_n$ et un petit axe $b_n$. Par surface ellipsoïdale associée à une ellipse, on entend une surface ellipsoïdale formée par une rotation de l'ellipse autour d'un de ses axes. Dans l'exemple représenté, chaque surface ellipsoïdale $S_n$ est obtenue par une rotation de ellipse $E_n$, à laquelle elle est associée, autour de son grand axe $a_n$. Une telle surface ellipsoïdale est dite allongée, ce qui correspond à la désignation anglosaxonne "prolate spheroid" ou "prolate ellipsoid".

Par surface réfléchissante, on entend une surface dont le coefficient de réflexion, dans tout ou partie de la bande spectrale d'émission $\Delta\lambda$, est supérieur à 50%, et de préférence supérieur à 80%. Dans le domaine spectral infrarouge, une paroi réfléchissante peut être formée à l'aide d'un matériau réfléchissant tel un métal, par exemple de l'or.

Chaque surface réfléchissante $S_n$ ellipsoïdale comporte un premier foyer P1-*n* et un deuxième foyer P2-*n*, les deux foyers étant distincts l'un de l'autre. Lorsque $1 < n < N$, le premier foyer P1-*n* est confondu avec le deuxième foyer P2-(*n-1*) d'une surface précédente $S_{n-1}$. Le deuxième foyer P2-*n* est confondu avec le premier foyer P1-(*n+1*) d'une surface suivante $S_{n+1}$. Lorsque $n = 1$ (première surface réfléchissante $S_1$), le deuxième foyer P2-1 est confondu avec le premier foyer P1-2 de la deuxième surface réfléchissante $S_2$. Lorsque $n = N$ (dernière surface), le premier foyer P1-*N* est confondu avec le deuxième foyer P2-(*N-1*) de la surface précédente $S_{N-1}$. La première surface $S_1$ permet une réflexion de l'onde lumineuse incidente 11 émise par la source de lumière 10, tandis que la dernière surface $S_N$ permet une réflexion de l'onde lumineuse, ayant traversé l'enceinte 10, vers le photodétecteur de mesure 20. Dans le mode de réalisation représenté sur la figure 2A ainsi que 3A à 3D, $N = 5$. *N* peut être compris entre 3 et 10, mais le demandeur considère que $N = 5$ correspond à un optimum.

L'onde lumineuse 11 émise par la source de lumière est successivement réfléchie par les différentes surfaces $S_n$, selon leurs rangs respectifs, pris dans l'ordre croissant. Autrement dit, les surfaces réfléchissantes $S_1... S_N$ s'étendent successivement entre la source de lumière 10 et le photodétecteur de mesure 20. Le terme s'étendre successivement est à interpréter en considérant la propagation de la lumière entre la source de lumière 10 et le photodétecteur de mesure 20. Le trajet de l'onde lumineuse, projeté sur la première paroi 4 ou la deuxième paroi 5, décrit un arc de cercle.

Compte tenu des contraintes de dimensionnement relatives à la compacité du capteur, l'inventeur a montré qu'il est préférable que la première ellipse $E_1$, associée à la première surface $S_1$, ait une excentricité inférieure à 0.7 ou à 0.5. Par excentricité d'une ellipse, présentant un grand rayon g et un petit rayon *p*, il est entendu le ratio :

$$e = \frac{\sqrt{g^2 - p^2}}{g} \quad (3)$$

L'excentricité d'une ellipse est strictement comprise entre 0 et 1, une excentricité de valeur nulle correspondant à un cercle.

La source de lumière 10 est configurée pour émettre l'onde lumineuse d'émission 11 selon un cône de lumière $\Omega_1$, dit premier cône, s'étendant autour d'un premier axe $\Delta_1$, jusqu'à la première surface réfléchissante $S_1$. La source de lumière 10 est disposée à un sommet du premier cône de lumière $\Omega_1$. La source de lumière 10 est de préférence confondue avec le premier foyer P1-1 de la première surface réfléchissante $S_1$.

Le terme confondu est à interpréter avec une certaine tolérance, et peut signifier "être situé dans le voisinage de", le voisinage correspondant à une zone s'étendant à une faible distance d'un point. Par faible distance, il est entendu une distance inférieure à 1 mm, voire inférieure à 0,5 mm.

La première surface réfléchissante $S_1$ est configurée pour réfléchir le premier cône de lumière $\Omega_1$ pour former un deuxième cône de lumière $\Omega_2$, s'étendant autour d'un deuxième axe $\Delta_2$. Le deuxième cône de lumière converge vers le deuxième foyer P2-1 de la première surface réfléchissante $S_1$, ce dernier correspondant au premier foyer P1-2 de la deuxième surface réfléchissante $S_2$. En aval du premier foyer P1-2, le deuxième cône de lumière $\Omega_2$ diverge jusqu'à la deuxième surface réfléchissante $S_2$.

La deuxième surface réfléchissante $S_2$ est configurée pour réfléchir le deuxième cône de lumière $\Omega_2$ pour former un troisième cône de lumière $\Omega_3$, s'étendant autour d'un troisième axe $\Delta_3$. Le troisième cône de lumière $\Omega_3$ converge vers le deuxième foyer P2-2 de la deuxième surface réfléchissante $S_2$, ce dernier correspondant au premier foyer P1-3 de la troisième surface réfléchissante $S_3$. En aval du premier foyer P1-3, le troisième cône de lumière $\Omega_3$ diverge jusqu'à la troisième surface réfléchissante $S_3$.

La troisième surface réfléchissante $S_3$ est configurée pour réfléchir le troisième cône de lumière $\Omega_3$ pour former un quatrième cône de lumière $\Omega_4$, s'étendant autour d'un quatrième axe $\Delta_4$. Le quatrième cône de lumière $\Omega_4$ converge vers le deuxième foyer P2-3 de la troisième surface réfléchissante $S_3$, ce dernier correspondant au premier foyer P1-4 de la quatrième surface réfléchissante $S_4$. En aval du premier foyer P1-4, le quatrième cône de lumière $\Omega_4$ diverge jusqu'à la quatrième surface réfléchissante $S_4$.

La quatrième surface réfléchissante $S_4$ est configurée pour réfléchir le quatrième cône de lumière $\Omega_4$ pour former un cinquième cône de lumière Qs, s'étendant autour d'un cinquième axe $\Delta_5$. Le cinquième cône de lumière $\Omega_5$ converge vers le deuxième foyer P2-4 de la quatrième surface réfléchissante $S_4$, ce dernier correspondant au premier foyer P1-5 de la cinquième surface réfléchissante $S_5$. En aval du premier foyer P1-5, le cinquième cône de lumière $\Omega_5$ diverge jusqu'à la cinquième surface réfléchissante $S_5$.

La cinquième surface réfléchissante $S_5$ est configurée pour réfléchir le cinquième cône de lumière $\Omega_5$ pour former un sixième cône de lumière $\Omega_6$, s'étendant autour d'un sixième axe $\Delta_6$. Le sixième cône de lumière $\Omega_6$ converge vers le deuxième foyer P2-5 de la cinquième surface réfléchissante $S_5$. Le photodétecteur de mesure 20 est disposé dans le cône de lumière $\Omega_6$, en amont ou en aval du deuxième foyer P2-5 ou sur le deuxième foyer P2-5.

Ainsi, l'onde lumineuse 11 émise par la source de lumière 10 se propage entre les différentes surfaces réfléchissantes $S_1$... $S_N$; avec, dans cet exemple, $N$=5. Entre deux surfaces successives $S_n$, $S_{n+1}$, l'onde lumineuse forme un cône $\Omega_{n+1}$ convergeant de la surface $S_n$ vers le deuxième foyer P2-$n$ de la surface $S_n$, formant le sommet du cône $\Omega_{n+1}$, et étant confondu avec le premier foyer P1-$n+1$ de la surface $S_{n+1}$. En aval de ce dernier, le cône $\Omega_{n+1}$ diverge jusqu'à la surface de rang $n+1$.

Ainsi, l'onde lumineuse se propage directement d'une surface réfléchissante ellipsoïdale $S_n$ de rang $n$ vers une surface réfléchissante $S_{n+1}$ ellipsoïdale de rang $n+1$. Par directement, on entend sans subir une réflexion sur une autre surface entre les deux surfaces réfléchissantes ellipsoïdales. Ainsi, entre la source de lumière 10 et le photodétecteur de mesure 20, l'onde lumineuse émise par la source de lumière subit $N$ réflexions, c'est-à-dire autant de réflexions que de surfaces ellipsoïdales disposées entre la source de lumière et le photodétecteur de mesure. Cela permet de minimiser les pertes de signal lors de chaque réflexion.

De façon avantageuse, comme représenté sur la figure 2A, la source de lumière 10 et le photodétecteur de mesure 20 sont portés par une même paroi, qui est dans cet exemple la première paroi 4. Les surfaces réfléchissantes ellipsoïdales $S_n$ de rang $n$ pair sont portées par la même paroi. Les surfaces réfléchissantes ellipsoïdales $S_n$ de rang $n$ impair sont portées par la paroi opposée à la paroi portant la source de lumière 10 et le photodétecteur de mesure 20. La paroi opposée est dans cet exemple de la deuxième paroi 5. En utilisant un nombre $N$ impair de surfaces réfléchissantes, le capteur est tel que la source de lumière 10 peut être disposée de façon coplanaire, ou sensiblement coplanaire, au photodétecteur de mesure 20.

Lorsque le capteur 1 comporte un photodétecteur de référence $20_{ref}$, ce dernier peut être disposé sur la même paroi que la source de lumière 10. Dans ce cas, une surface ellipsoïdale réfléchissante de référence $S_{ref}$ est disposée sur la paroi opposée, comme représenté sur la figure 2B. La surface réfléchissante de référence est associée à une ellipse $E_{ref}$. Sur la figure 2B, on a représenté l'intérieur de l'enceinte 2 en suivant une génératrice circulaire $D_2$ représentée en traits mixtes sur la figure 1B. Cette représentation revient à dérouler l'enceinte 2 selon la génératrice circulaire $D_2$. La surface réfléchissante $S_{ref}$ comporte un premier foyer $P_{1-ref}$ et un deuxième foyer $P_{2-ref}$, les foyers étant distincts l'un de l'autre. La source de lumière 10 génère un cône de lumière auxiliaire $\Omega'_1$, s'étendant entre la source de lumière 10 et la surface réfléchissante de référence $S_{ref}$. Cette dernière réfléchit le cône auxiliaire $\Omega'_1$ pour former un cône de référence $Q_{ref}$ qui converge en direction du photodétecteur de référence $20_{ref}$. La source de lumière 10 est disposée sur le premier foyer $P_{1-ref}$ de la surface de référence $S_{ref}$. Le photodétecteur de référence $20_{ref}$ est disposé dans le cône de référence $\Omega_{ref}$, en amont ou en aval du deuxième foyer $P_{2-ref}$ ou sur le deuxième foyer $P_{2-ref}$. A l'instar des surfaces réfléchissantes de rang impair, la surface réfléchissante de référence est de préférence portée par la paroi opposée à celle portant la source de lumière, le photodétecteur de mesure 20 et le photodétecteur de référence $20_{ref}$.

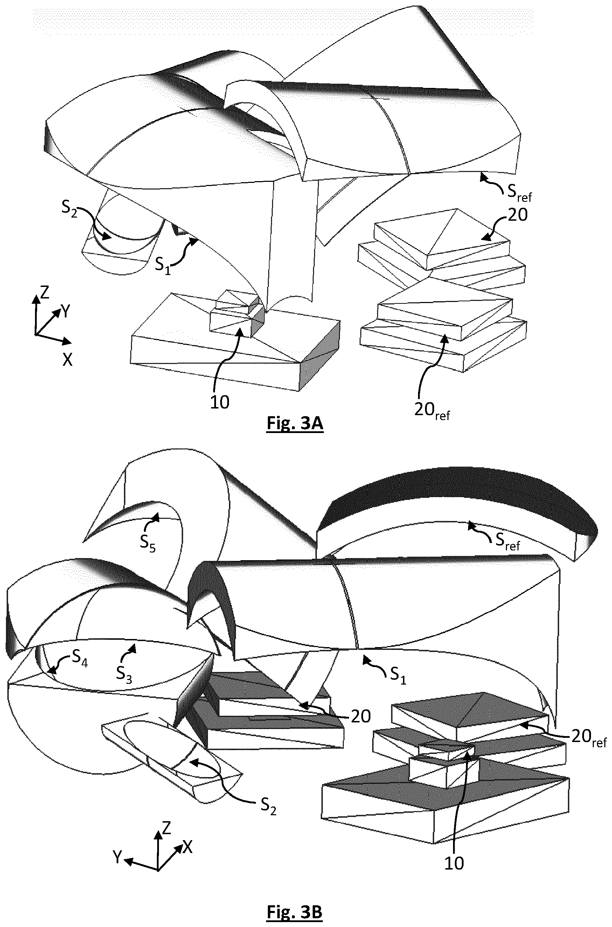

Les figures 3A à 3D montrent l'agencement des différentes surfaces ellipsoïdales de référence dans un exemple de mise en oeuvre de l'invention. Les figures 3A à 3D ont été obtenues en tournant progressivement un modèle tridimensionnel de capteur selon le sens de rotation positif représenté sur la figure 1B.

Sur la figure 3A, on distingue la source de lumière 10, le photodétecteur de référence $20_{ref}$ et la surface réfléchissante de référence $S_{ref}$. On distingue également les première et deuxième surfaces réfléchissantes $S_1$ et $S_2$. Sur la figure 3B, outre les éléments cités en lien avec la figure 3A, on distingue les troisième, quatrième et cinquième surfaces réfléchissantes.

Selon ce mode de réalisation, chaque surface réfléchissante est ménagée au niveau d'une face interne d'une première ou deuxième paroi : les surfaces réfléchissantes de rang pair sont intégrées dans la face interne $4_i$ de la première paroi 4, tandis que les surfaces réfléchissantes de rang impair sont intégrées dans face interne $5_i$ de la deuxième paroi 5. L'intégration des surfaces réfléchissantes de forme ellipsoïdale de révolution dans chaque face interne peut être obtenue par des techniques de fabrication de type moulage ou usinage. Le moulage constitue une option préférée, car après que les moules ont été constitués, il est simple à mettre en oeuvre, répétitif, et moins coûteux. Selon ce mode de réalisation, l'enceinte 2 peut être formée par un simple assemblage de la première paroi 4 contre la deuxième paroi 5, la paroi transversale 6 étant intégrée soit à la première paroi 4, soit à la deuxième paroi 5, soit partiellement sur les deux parois.

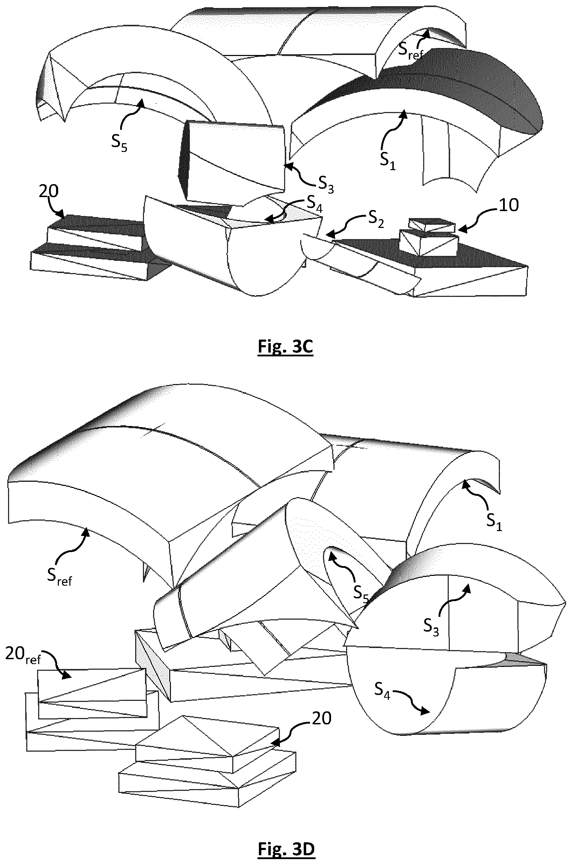

Les figures 3C et 3D montrent d'autres détails des surfaces réfléchissantes précédemment décrites.

Le tableau 1 décrit les coordonnées des centres de la source de lumière 10, du photodétecteur 20 et du photodétecteur de référence $20_{ref}$. Le centre de la source 10 est considéré comme étant l'origine du repère. On a également indiqué l'angle d'orientation par rapport à l'axe Z. Le tableau 1 présente également les coordonnées principales caractéristiques des ellipsoïdes de révolution formant chaque surface réfléchissante. Pour chaque ellipsoïde, on a renseigné les coordonnées du centre, correspondant à l'intersection du grand axe $a$ et du petit axe $b$ de l'ellipse associée à chaque surface ellipsoïdale, selon les axes X, Y et Z. On a également renseigné les angles d'inclinaison $\theta_x$, $\theta_y$ et $\theta_z$ du grand axe $a$ par rapport aux axes X, Y et Z. On a également renseigné les dimensions du grand axe $a$ et du petit axe $b$. Pour les angles, l'unité est le degré. Pour les coordonnées ou dimensions, l'unité est le mm.

Tableau 1

|  | X | Y | Z | $\theta_X$ | $\theta_Y$ | $\theta_Z$ | $a$ | $b$ |
|---|---|---|---|---|---|---|---|---|
| 10 | 0.0 | 0.0 | 0 | 0 | 0 | 0 |  |  |
| $20_{ref}$ | 5.6 | 4.4 | -1.3 | 0 | 0 | 76.4 |  |  |
| $E_{ref}$ | 2.8 | 2.2 | -0.3 | 90 | 38.2 | -7.3 | 8.1 | 7.3 |
| 20 | 3.7 | 10.1 | -1.3 | 0 | 0 | 140.3 |  |  |
| $E_1$ | -2.8 | 2.1 | 0.0 | 90 | -37.5 | 0 | 6.7 | 5.7 |
| $E_2$ | -5.6 | 5.5 | 0.5 | 90 | 92.5 | 20 | 1.8 | 1.2 |
| $E_3$ | -5.0 | 8.1 | 0.9 | 90 | 65 | 0 | 3.7 | 3.4 |
| $E_4$ | -2.2 | 10.4 | 1.7 | 90 | 25 | 10 | 3.6 | 2.6 |
| $E_5$ | 1.8 | 10.8 | 0.6 | 90 | -19.9 | -38.4 | 5.2 | 4.5 |

L'inclinaison des grands axes respectifs de chaque ellipse, à partir de laquelle chaque ellipsoïde est formée, est donc variable, en particulier par rapport à l'axe transversal Z.

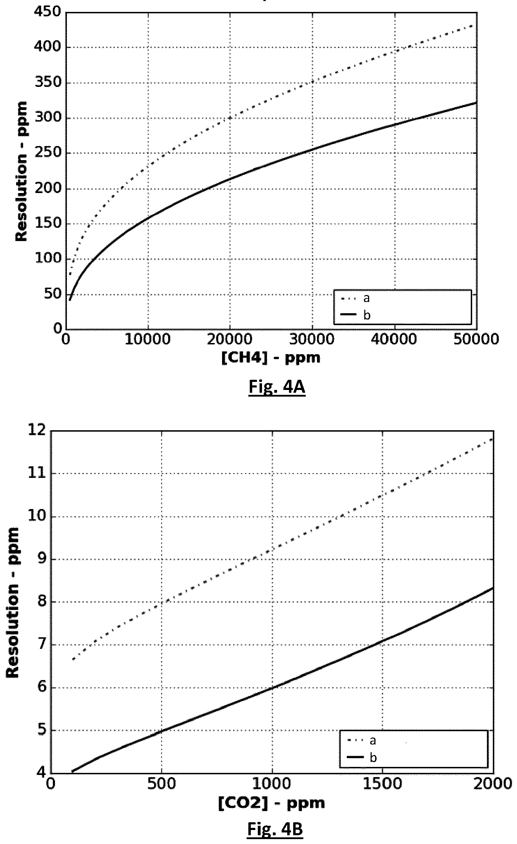

Des simulations ont été effectuées afin d'estimer les performances de la configuration précédemment décrite. On a estimé les variations détectables de la concentration d'une espèce gazeuse en fonction de la concentration de ladite espèce gazeuse dans le gaz occupant l'enceinte 2. La figure 4A représente les résultats obtenus pour le méthane ($CH_4$). L'axe des abscisses représente la concentration en $CH_4$ dans l'enceinte, tandis que l'axe des ordonnées montre les variations détectables de la concentration en $CH_4$. Sur la figure 4A, on a également représenté des estimations effectuées en considérant respectivement les capteurs de gaz décrits dans WO2018162848 (courbe $a$) et selon l'invention (courbe $b$) .La figure 4B est une figure analogue à la figure 4A, l'espèce gazeuse considérée étant $CO_2$. On observe que dans les deux cas, le capteur de gaz selon l'invention permet d'estimer une concentration de gaz plus faible que le capteur selon l'art antérieur.

L'invention pourra être appliquée pour la détection de gaz dans la surveillance de l'environnement, ou dans des applications de contrôle de gaz industriels, notamment dans l'agroalimentaire, l'industrie pétrolière, ou la distribution de gaz.

**Revendications**

1. Capteur (1) de gaz comportant une enceinte (2), apte à recevoir un gaz (G), l'enceinte comportant une paroi transversale (6), s'étendant, autour d'un axe transversal (Z), entre une première paroi (4) et une deuxième paroi (5), le capteur comportant également :

   - une source de lumière (10), configurée pour émettre une onde lumineuse (11) se propageant dans l'enceinte en formant, à partir de la source de lumière, un premier cône de lumière ($\Omega_1$);
   - un photodétecteur de mesure (20) apte à détecter une onde lumineuse (14) émise par la source de lumière (10) et s'étant propagé à travers l'enceinte;

   le capteur étant tel que la première paroi et la deuxième paroi comportent chacune au moins une surface réfléchissante, formant une partie d'une ellipsoïde de révolution, à chaque surface réfléchissante étant associé un rang $n$, $n$ étant un entier supérieur ou égal à 1, de telle sorte que le capteur comporte :

   - une première surface réfléchissante de rang 1 ($S_1$), présentant un premier foyer (P1-1) et un deuxième foyer (P1-2), la première surface réfléchissante étant disposée face à la source de lumière (10), la première surface réfléchissante formant une partie d'une ellipsoïde de révolution associée à une ellipse dont l'excentricité est inférieure ou égale à 0.7 ;
   - au moins une surface réfléchissante ($S_n$) de rang $n$ strictement supérieur à 1, chaque surface réfléchissante de rang $n$ présentant :

      • un premier foyer (P1-$n$), confondu avec le deuxième foyer (P2-$n$-1) d'une surface réfléchissante ($S_{n-1}$) de rang précédent $n$-1 ;
      • un deuxième foyer (P2-$n$), distinct du premier foyer (P1-$n$) confondu avec le premier foyer d'une surface réfléchissante ($S_{n+1}$) de rang suivant $n$+1 ;

   - une dernière surface réfléchissante ($S_N$) de rang $N$, comportant un premier foyer (P1-$N$), confondu avec le deuxième foyer d'une surface réfléchissante de rang précédent ($S_{N-1}$), la dernière surface réfléchissante comportant également un deuxième foyer (P2-$N$) ;

   de telle sorte que l'onde lumineuse (11) émise par la source de lumière est successivement réfléchie par les $N$ surfaces réfléchissantes ellipsoïdales de révolution, selon leur rang respectif, avant de converger vers le deuxième foyer (P2-$N$) de la dernière surface réfléchissante ($S_N$), en formant un dernier cône de lumière ($\Omega_N$), le photodétecteur de mesure étant disposé de manière à s'étendre dans le dernier cône de lumière.

2. Capteur selon la revendication 1, dans lequel la source de lumière (10) est disposée au niveau du premier foyer (P1-1) de la première surface réfléchissante ($S_1$), ou à une distance inférieure à 1 mm de ce dernier.

3. Capteur selon l'une quelconque des revendications précédentes, dans lequel le photodétecteur de mesure (20) est disposé au niveau du deuxième foyer (P2-$N$) de la dernière surface réfléchissante ($S_N$), ou à une distance inférieure à 1 mm de ce dernier.

4. Capteur selon l'une quelconque des revendications précédentes, dans lequel :

   - chaque surface réfléchissante de rang $n$ est configurée pour réfléchir l'onde lumineuse qu'elle reçoit en formant un cône de lumière ($\Omega_{n+1}$) de rang $n$+1, ce dernier s'étendant autour d'un axe de propagation ($\Delta_{n+1}$) de rang $n$+1 ;
   - lorsque $n<N$, l'axe de propagation ($\Delta_{n+1}$) de rang n+1 s'étend entre la surface ($S_n$) de rang $n$ jusqu'à la surface ($S_{n+1}$) de rang $n$+1, en passant par le deuxième foyer (P2-$n$) de la surface ($S_n$) de rang $n$, ce dernier étant confondu avec le premier foyer (P1-$n$+1) de la surface ($S_{n+1}$) de rang $n$+1 ;
   - lorsque $n = N$, l'axe de propagation ($\Delta_{N+1}$) de rang $N$+1 s'étend entre la surface ($S_N$) de rang N jusqu'au photodétecteur de mesure (20) ;

   de telle sorte que l'onde lumineuse émise par la source de lumière (10) subit un nombre de réflexions correspondant au nombre ($N$) de surfaces réfléchissantes avant d'atteindre le photodétecteur de mesure.

5. Capteur selon la revendication 4, dans lequel lorsque $n<N$ chaque cône de lumière ($\Omega_{n+1}$) de rang $n$+1 converge vers le deuxième foyer (P2-$n$) de la surface ($S_n$) de rang $n$ à partir de laquelle il se propage, puis diverge vers la surface ($S_{n+1}$) de rang $n$ +1 vers laquelle il se propage.

6. Capteur selon l'une quelconque des revendications précédentes, dans lequel la source de lumière (10) et le photodétecteur (20) sont solidaires d'une face interne ($4_i$) de la première paroi (4), la face interne étant orientée vers l'intérieur de l'enceinte (2).

7. Capteur selon la revendication 6, dans lequel :

   - les surfaces réfléchissantes de rang pair sont ménagées sur la face interne ($4_i$) de la première paroi (4);
   - les surfaces réfléchissantes de rang impair sont ménagées sur une face interne ($5_i$) de la deuxième paroi (5).

8. Capteur selon la revendication 7, dans lequel l'enceinte (2) est formée par l'assemblage de la première paroi (4) en regard de la deuxième paroi (5).

9. Capteur selon l'une quelconque des revendications précédentes, dans lequel le nombre de surfaces réfléchissantes s'étendant entre la source de lumière (10) et le photodétecteur de mesure (20) est impair.

10. Capteur selon la revendication 9, dans lequel le nombre de surfaces réfléchissantes s'étendant entre la source de lumière et le photodétecteur de mesure est égal à 5.

11. Capteur selon l'une quelconque des revendications précédentes, comportant un photodétecteur de référence ($20_{ref}$), configuré pour détecter une onde lumineuse considérée comme non atténuée par le gaz (G).

12. Capteur selon la revendication 11, comportant une surface réfléchissante de référence, formant une ellipsoïde de révolution, la surface de référence comportant :

   - un premier foyer (P1- ref) disposé au niveau de la source de lumière, ou à une distance inférieure à 1 mm de cette dernière ;
   - un deuxième foyer, (P2 - ref) disposé au niveau du photodétecteur de mesure, ou à une distance inférieure à 1 mm de ce dernier.

13. Procédé d'analyse d'un gaz (G) à l'aide d'un capteur (1) selon l'une quelconque des revendications précédentes, le procédé comportant les étapes suivantes :

   a) introduction du gaz dans l'enceinte (2) du capteur (1);
   b) illumination du gaz à l'aide de la source de lumière (10) ;
   c) mesure d'une intensité lumineuse d'une onde lumineuse, émise par la source de lumière, et s'étant propagée à travers l'enceinte (10) par le photodétecteur de mesure (20) ;
   d) détermination d'une quantité d'une espèce gazeuse dans le gaz ($G_x$), à partir de l'intensité lumineuse mesurée.

14. Procédé selon la revendication 13, dans laquelle l'étape d) est mise en oeuvre par une unité de traitement (30) à partir d'un signal généré par le photodétecteur de mesure (20).

**Patentansprüche**

1. Gassensor (1), der eine Kammer (2) umfasst, die geeignet ist, ein Gas (G) aufzunehmen, wobei die Kammer eine Querwand (6) umfasst, die sich um eine Querachse (Z) herum zwischen einer ersten Wand (4) und einer zweiten Wand (5) erstreckt, wobei der Sensor ferner umfasst:

   - eine Lichtquelle (10), die dazu ausgestaltet ist, eine Lichtwelle (11) auszusenden, die sich in der Kammer ausbreitet, wobei sie, ausgehend von der Lichtquelle, einen ersten Lichtkegel ($\Omega_1$) bildet;
   - einen Messfotodetektor (20), der geeignet ist, eine Lichtwelle (14) zu detektieren, die von der Lichtquelle (10) ausgesendet wurde und sich durch die Kammer hindurch ausgebreitet hat;

   wobei der Sensor dergestalt ist, dass die erste Wand und die zweite Wand jeweils mindestens eine reflektierende Fläche umfassen, die einen Teil eines Rotationsellipsoids bildet, wobei jeder reflektierenden Fläche ein Rang $n$ zugeordnet ist, wobei $n$ eine ganze Zahl größer oder gleich 1 ist, so dass der Sensor umfasst:

- eine erste reflektierende Fläche des Rangs 1 ($S_1$), die einen ersten Brennpunkt (P1-1) und einen zweiten Brennpunkt (P1-2) aufweist, wobei die erste reflektierende Fläche gegenüber der Lichtquelle (10) angeordnet ist, wobei die erste reflektierende Fläche einen Teil eines Rotationsellipsoids bildet, der einer Ellipse zugeordnet ist, deren Exzentrizität kleiner oder gleich 0,7 ist;
- mindestens eine reflektierende Fläche ($S_n$) des Rangs $n$ strikt größer als 1, wobei jede reflektierende Fläche des Rangs $n$ aufweist:

    • einen ersten Brennpunkt (P1-$n$), der mit dem zweiten Brennpunkt (P2-$n$-1) einer reflektierenden Fläche ($S_{n-1}$) des vorhergehenden Rangs $n$-1 zusammenfällt;
    • einen zweiten Brennpunkt (P2-$n$), der von dem ersten Brennpunkt (P1-$n$) verschieden ist und der mit dem ersten Brennpunkt einer reflektierenden Fläche ($S_{n+1}$) des folgenden Rangs $n$+1 zusammenfällt;

- eine letzte reflektierende Fläche ($S_N$) des Rangs $N$, die einen ersten Brennpunkt (P1-$N$) umfasst, der mit dem zweiten Brennpunkt einer reflektierenden Fläche des vorhergehenden Rangs ($S_{N-1}$) zusammenfällt, wobei die letzte reflektierende Fläche auch einen zweiten Brennpunkt (P2-$N$) umfasst;

so dass die von der Lichtquelle ausgesendete Lichtwelle (11) nacheinander von den $N$ rotationselliptischen reflektierenden Flächen, gemäß ihrem jeweiligen Rang, reflektiert wird, bevor sie zu dem zweiten Brennpunkt (P2-$N$) der letzten reflektierenden Fläche ($S_N$) hin konvergiert, wobei sie einen letzten Lichtkegel ($\Omega_N$,) bildet, wobei der Messfotodetektor so angeordnet ist, dass er sich in dem letzten Lichtkegel erstreckt.

2. Sensor nach Anspruch 1, bei dem die Lichtquelle (10) auf Höhe des ersten Brennpunkts (P1-1) der ersten reflektierenden Fläche ($S_1$) oder in einem Abstand von weniger als 1 mm von Letzterem angeordnet ist.

3. Sensor nach einem der vorhergehenden Ansprüche, bei dem der Messfotodetektor (20) auf Höhe des zweiten Brennpunkts (P2-$N$) der letzten reflektierenden Fläche ($S_N$) oder in einem Abstand von weniger als 1 mm von Letzterem angeordnet ist.

4. Sensor nach einem der vorhergehenden Ansprüche, bei dem:

- jede reflektierende Fläche des Rangs $n$ dazu ausgestaltet ist, die Lichtwelle, die sie empfängt, zu reflektieren und dabei einen Lichtkegel ($\Omega_{n+1}$) des Rangs $n$+1 zu bilden, wobei sich Letzterer um eine Ausbreitungsachse ($\Delta_{n+1}$) des Rangs $n$+1 herum erstreckt;
- wenn $n<N$, erstreckt sich die Ausbreitungsachse ($\Delta_{n+1}$) des Rangs $n$+1 zwischen der Fläche ($S_n$) des Rangs $n$ bis zur Fläche ($S_{n+1}$) des Rangs $n$+1, wobei sie durch den Brennpunkt (P2-$n$) der Fläche ($S_n$) des Rangs $n$ verläuft, wobei Letzterer mit dem ersten Brennpunkt (P1-$n$+1) der Fläche ($S_{n+1}$) des Rangs $n$+1 zusammenfällt;
- wenn $n = N$, erstreckt sich die Ausbreitungsachse ($\Delta_{n+1}$) des Rangs $N$+1 zwischen der Fläche ($S_N$) des Rangs N bis zum Messfotodetektor (20);

so dass die von der Lichtquelle (10) ausgesendete Lichtwelle eine Anzahl von Reflexionen entsprechend der Anzahl ($N$) reflektierender Flächen erfährt, bevor sie den Messfotodetektor erreicht.

5. Sensor nach Anspruch 4, bei dem, wenn $n<N$, jeder Lichtkegel ($\Omega_{n+1}$) des Rangs $n$+1 zu dem zweiten Brennpunkt (P2-$n$) der Fläche ($S_n$) des Rangs $n$ hin konvergiert, von der aus er sich ausbreitet, dann zu der Fläche ($S_{n+1}$) des Rangs $n$+1 hin divergiert, zu der hin er sich ausbreitet.

6. Sensor nach einem der vorhergehenden Ansprüche, bei dem die Lichtquelle (10) und der Fotodetektor (20) fest mit einer Innenseite (4i) der ersten Wand (4) verbunden sind, wobei die erste Wand zum Innenraum der Kammer (2) hin ausgerichtet ist.

7. Sensor nach Anspruch 6, bei dem:

- die reflektierenden Flächen geraden Ranges auf der Innenseite (4i) der ersten Wand (4) ausgebildet sind;
- die reflektierenden Flächen ungeraden Ranges auf der Innenseite (5i) der zweiten Wand (5) ausgebildet sind.

8. Sensor nach Anspruch 7, bei dem die Kammer (2) durch das Montieren der ersten Wand (4) gegenüber der zweiten Wand (5) gebildet wird.

9. Sensor nach einem der vorhergehenden Ansprüche, bei dem die Anzahl reflektierender Flächen, die sich zwischen der Lichtquelle (10) und dem Messfotodetektor (20) erstrecken, ungerade ist.

10. Sensor nach Anspruch 9, bei dem die Anzahl reflektierender Flächen, die sich zwischen der Lichtquelle und dem Messfotodetektor erstrecken, gleich 5 ist.

11. Sensor nach einem der vorhergehenden Ansprüche, der einen Referenzfotodetektor ($20_{ref}$) umfasst, der dazu ausgestaltet ist, eine Lichtwelle zu detektieren, die als durch das Gas (G) nicht abgeschwächt betrachtet wird.

12. Sensor nach Anspruch 11, der eine reflektierende Referenzfläche umfasst, die ein Rotationsellipsoid bildet, wobei die Referenzfläche umfasst:

   - einen ersten Brennpunkt (P1 - ref), der auf Höhe der Lichtquelle oder in einem Abstand von weniger als 1 mm von Letzterer angeordnet ist;
   - einen zweiten Brennpunkt (P2 - ref), der auf Höhe des Messfotodetektors oder in einem Abstand von weniger als 1 mm von Letzterem angeordnet ist.

13. Verfahren zur Analyse eines Gases (G) mithilfe eines Sensors (1) nach einem der vorhergehenden Ansprüche, wobei das Verfahren die folgenden Schritte umfasst:

   a) Einleiten des Gases in die Kammer (2) des Sensors (1);
   b) Beleuchten des Gases mithilfe der Lichtquelle (10);
   c) Messen einer Lichtintensität einer Lichtwelle, die von der Lichtquelle ausgesendet wurde und sich durch die Kammer (10) hindurch ausgebreitet hat, durch den Messfotodetektor (20);
   d) Bestimmen einer Menge einer gasförmigen Spezies in dem Gas ($G_x$) anhand der gemessenen Lichtintensität.

14. Verfahren nach Anspruch 13, bei dem der Schritt d) von einer Verarbeitungseinheit (30) anhand eines von dem Messfotodetektor (20) erzeugten Signals ausgeführt wird.

**Claims**

1. Gas sensor (1) comprising an enclosure (2) able to receive a gas (G), the enclosure comprising a sidewall (6) that extends, about a transverse axis (Z), between a first wall (4) and a second wall (5), the sensor also comprising:

   - a light source (10) configured to emit a light wave (11) that propagates through the enclosure and forms, from the light source, a first cone of light ($\Omega_1$);
   - a measuring photodetector (20) able to detect a light wave (14) emitted by the light source (10) and propagating through the enclosure;

   the sensor being such that the first wall and the second wall each comprise at least one reflective surface, forming a portion of an ellipsoid of revolution, with each reflective surface being associated with a rank *n, n* being an integer higher than or equal to 1, such that the sensor comprises:

   - a first reflective surface of rank 1 ($S_1$), having a first focal point (P1-1) and a second focal point (P1-2), the first reflective surface being placed facing the light source (10), the first reflective surface forming a portion of an ellipsoid of revolution associated with an ellipse the eccentricity of which is lower than or equal to 0.7;
   - at least one reflective surface ($S_n$) of rank *n* strictly higher than 1, each reflective surface of rank *n* having:

      • a first focal point (P1- *n*), coincident with the second focal point (P2- *n-1)* of a reflective surface ($S_{n-1}$) of preceding rank *n* -1;
      • a second focal point (P2- *n)*, distinct from the first focal point (P1- *n)* and coincident with the first focal point of a reflective surface ($S_{n+1}$) of following rank *n* +1;

   - a last reflective surface ($S_N$) of rank *N,* comprising a first focal point (P1- *N)* coincident with the second focal point of a reflective surface of preceding rank ($S_{N-1}$), the last reflective surface also comprising a second focal point (P2- *N)*;

such that the light wave (11) emitted by the light source is successively reflected by the $N$ ellipsoidal-of-revolution reflective surfaces, according to their respective rank, before converging towards the second focal point (P2-$N$) of the last reflective surface ($S_N$) in such a way as to form a last cone of light ($\Omega_N$), the measuring photodetector being placed so as to lie in the last cone of light.

2. Sensor according to Claim 1, wherein the light source (10) is placed at the first focal point (P1-1) of the first reflective surface ($S_1$), or at a distance smaller than 1 mm from the latter.

3. Sensor according to either one of the preceding claims, wherein the measuring photodetector (20) is placed at the second focal point (P2-$N$) of the last reflective surface ($S_N$), or at a distance smaller than 1 mm from the latter.

4. Sensor according to any one of the preceding claims, wherein:

   - each reflective surface of rank $n$ is configured to reflect the light wave that it receives in such a way as to form a cone of light ($\Omega_{n+1}$) of rank $n+1$, the latter extending about a propagation axis ($\Delta_{n+1}$) of rank $n+1$;
   - when $n<N$, the propagation axis ($\Delta_{n+1}$) of rank $n+1$ extends from the surface ($S_n$) of rank $n$ to the surface ($S_{n+1}$) of rank n+1 and through the second focal point (P2-$n$) of the surface ($S_n$) of rank $n$, the latter being coincident with the first focal point (P1-$n+1$) of the surface ($S_{n+1}$) of rank $n+1$;
   - when $n = N$, the propagation axis ($\Delta_{N+1}$) of rank $N+1$ extends from the surface ($S_N$) of rank N to the measuring photodetector (20);

   in such a way that the light wave emitted by the light source (10) undergoes a number of reflections corresponding to the number ($N$) of reflective surfaces before reaching the measuring photodetector.

5. Sensor according to Claim 4, wherein, when $n<N$, each cone of light ($\Omega_{n+1}$) of rank n+1 converges towards the second focal point (P2-$n$) of the surface ($S_n$) of rank $n$ from which it is propagating, then diverges towards the surface ($S_{n+1}$) of rank $n+1$ towards which it is propagating.

6. Sensor according to any one of the preceding claims, wherein the light source (10) and the photodetector (20) are integral with an internal face (4i) of the first wall (4), the internal face being oriented towards the interior of the enclosure (2).

7. Sensor according to Claim 6, wherein:

   - reflective surfaces of even rank are arranged on the internal face (4i) of the first wall (4);
   - reflective surfaces of uneven rank are arranged on an internal face (5i) of the second wall (5).

8. Sensor according to Claim 7, wherein the enclosure (2) is formed by assembling the first wall (4) facing the second wall (5).

9. Sensor according to any one of the preceding claims, wherein the number of reflective surfaces lying between the light source (10) and the measuring photodetector (20) is uneven.

10. Sensor according to Claim 9, wherein the number of reflective surfaces lying between the light source and the measuring photodetector is equal to 5.

11. Sensor according to any one of the preceding claims, comprising a reference photodetector ($20_{ref}$) configured to detect a light wave considered not to be attenuated by the gas (G).

12. Sensor according to Claim 11, comprising a reference reflective surface, forming an ellipsoid of revolution, the reference surface comprising:

   - a first focal point (P1 - ref) placed at the light source, or at a distance smaller than 1 mm from the latter;
   - a second focal point (P2 - ref) placed at the measuring photodetector, or at a distance smaller than 1 mm from the latter.

13. Method for analysing a gas (G) using a sensor (1) according to any one of the preceding claims, the method comprising the following steps:

a) introducing the gas into the enclosure (2) of the sensor (1);

b) illuminating the gas using the light source (10);

c) measuring, with the measuring photodetector (20), a light intensity of a light wave emitted by the light source and having propagated through the enclosure (10);

d) determining an amount of a gaseous species in the gas ($G_x$), on the basis of the measured light intensity.

14. Method according to Claim 13, wherein step d) is implemented by a processing unit (30) on the basis of a signal generated by the measuring photodetector (20).

1

G, G_x

5    5_e

5_i

Z
X

2

Φ

h

6

10    20_ref    4_i    20

3

30

4_e    4

**Fig. 1A**

+

D_1

4i

Y
X

Φ'

20

Φ

20_ref

D_2

10

**Fig. 1B**

**Fig. 2A**

**Fig. 2B**

**Fig. 3A**

**Fig. 3B**

**Fig. 3C**

**Fig. 3D**

Fig. 4A

Fig. 4B

**EP 3 959 506 B1**

**Documents brevets cités dans la description**

- US 5026992 A
- WO 2007064370 A
- EP 2711687 A
- EP 2891876 A
- EP 3208601 A
- WO 2018162848 A
- FR 3022999